Europäisches Patentamt

European Patent Office

Office européen des brevets

(11) Publication number: **0 266 808 B1**

(12) **EUROPEAN PATENT SPECIFICATION**

(45) Date of publication of patent specification: **18.03.92** (51) Int. Cl.⁵: **E21B 33/138**

(21) Application number: **87201737.1**

(22) Date of filing: **11.09.87**

(54) Process for delaying and controlling the formation of gels or precipitates derived from aluminum and corresponding compositions together with its applications particularly those concerning the operation of oil wells.

(30) Priority: **08.10.86 FR 8614089**

(43) Date of publication of application:
**11.05.88 Bulletin 88/19**

(45) Publication of the grant of the patent:
**18.03.92 Bulletin 92/12**

(84) Designated Contracting States:
**DE GB IT NL**

(56) References cited:
**FR-A- 2 150 637**
**FR-A- 2 584 387**
**US-A- 3 614 985**

(73) Proprietor: **PUMPTECH N.V.**
**Atlantic House Noorderlaan 147 Bus 5C**
**B-2030 Antwerpen(BE)**

(72) Inventor: **Parker, Alan**
**8 rue J-J. Rousseau**
**F-38320 Eybens(FR)**

(74) Representative: **Richebourg, Michel François**
**Etudes et Fabrication Dowell Schlumberger**
**Z.I. Molina La Chazotte B.P. 90**
**F-42003 Saint-Etienne Cédex 1(FR)**

Rank Xerox (UK) Business Services

# EP 0 266 808 B1

**Description**

This invention covers compositions which make it possible to retard and control the formation of gels or precipitates derived from aluminum, and has applications for the operation of oil wells.

During the production of hydrocarbons from underground formations, it is often desirable to reduce the permeability of certain zones in the formation. This is the case, for example, when a formation neighboring on the production well is likely todirect water into the well. Another example is where zones of high permeability are neighboring on the injection wells.

One method of reducing the permeability of certain undergound zones consists in precipitating a product in-situ. This technique is well understood and is usually employed by the placing of two incompatible fluids inside the reservoir. This leads to the formation of a precipitate, giving reduced permeability wherever the two fluids come into contact and mix inside the reservoir. The specialist is referred to US Patents, Nos. 3,837,400 -4,031,958 and 4,304,301.

A second possibility lies in the introduction of a fluid designed to react with a particular component of the reservoir, such as inherent water in the latter, to form an insoluble precipitate. The specialist is referred to US Patent No. 3,837,400.

Another technique consists yet again in introducing a fluid with the intrinsic potential of creating a precipitate or gel, such formation however requiring retardment by some means. The specialist is referred to US Patents, Nos 4,413,680 and 3,614,985.

In order to master the operation, it is essential that two parameters are controlled: the time required for the formation of the gel or precipitate and the morphology of the solid phase subsequently produced. This is because the time taken for the reaction determines the possible degree of penetration into the formation, while the morphology of the solid phase defines the degree by which the permeability of the formation is reduced.

US Patent No. 3,614,985 describes the precipitation of metal hydroxides such as chromium hydroxide or aluminum hydroxide in a homogeneous solution.

Numerous simple salts of aluminum III (such as aluminum chloride or aluminum nitrate) are soluble in slightly acid mediums, but form insoluble aluminum hydroxides when the pH level goes beyond about 5.

The previously cited patent describes the delayed formation of aluminum hydroxide-type compounds by employing a solution consisting of a suitable aluminum salt, and an activator. The activator is used to slowly increase the pH level within the temperature ranges normally found at the well bottom. This in turn leads to the slow formation of an insoluble hydroxide phase. As stated in this document, a suitable activator is urea, which undergoes hydrolosis at high temperatures to form ammonia which consequently raises the pH of the solution. The solid aluminum hydroxide precipitate phase has a tendency to remain amorphous, with the consistency of a gel.

The only example of a practical system described in the above mentioned patent concerns the precipitation of aluminum hydroxide from aluminum chloride. However, the way it is described, this solution does not have a practical application in oilfield operations because of both safety and technical constraints. In fact, aluminum chloride in solid form reacts violently with water, giving off heat and hydrochloric acid vapors.

Such a system would therefore be extremely dangerous to handle in the field. In addition, the use of concentrated solutions of aluminum chloride is not desirable on account of the volume of fluid required and the need to employ a corrosion inhibitor to protect the fluid-metering pumps. It is an established fact that corrosion inhibitors often affect well treatment.

Typical treatment solutions (approximately 0.05 to 0.15 M A1 3+) have a pH of about 3 and, as recommended in the above patent, it is preferable to adjust the pH to about 4. In fact, with a pH of 3, fluid interaction with the carbonate present in the porous medium is very rapid and limits peneration of the fluid into the matrix. Even in the case of a very pure sandstone, where reaction with carbonates is not a problem, a pH of 3 requires a strong concentration of urea to start the precipitation reaction and thus a pH of 4 is preferable.

Unfortunately this pH adjustment is impossible, or at best impractical, with the system described in the above patent. The addition of an alkaline agent to a typical aluminum chloride solution in fact produces immediate and inevitable precipitation, and while this precipitation does dissolve slowly over a period of time and lead to a higher pH, its presence requires the use of intermittent mixing techniques. These can only be applied to large volumes of fluid, with operations lasting several days or weeks, particularly as the operations are performed in very restricted areas. The preceding process is valid when fresh water is available. Where the mix water employed is not pure, but rather the classic brine solution found on oilfields, whether brine proper or sea water etc., the initial precipitate formed by the addition of the alkaline agent

2

does not dissolve, even when energetically mixed at high temperatures over a long period. In such cases, which are all too frequent, there is no solution to the problem.

An important step was taken with Main Application FR-A-85.10272, lodged 2 July 1985, which describes the use of an aluminum hydroxychloride. This polymer salt is produced commercially by the electrolysis of aluminum chloride solutions. Its formula in the crystalline form is :

$$[Al_2(OH)_5 Cl, 2.5H_2O]_n$$

More usually it has the form of a partially neutralized acid aluminum salt, with the general formula :

$$Al_n(OH)_m X_p$$

in which X in a mineral or organic anion, or a mixture of mineral and organic anions, with $(pxq) + m = 3n$, q begin the valency of the anion, the ratio $(m/3n) \times 100$ defining the basicity of the said salt and situated between 30 and 80 %.

Use of an aluminum hydroxychloride as a plugging agent makes it possible to solve the problems encountered with previous techniques and also offers the specialist new possiblities, especially in connection with the effective control of the gelling or precipitation time and monitoring the morphology of the precipitate.

The specialist can refer to the application for above-mentioned French Patent No. 85-10272, the details of which are included here as a reference.

According to this application, it is shown that weak cases other than urea can be used as "acitvators", especially hexametheylenetetramine (activator) in combination with an aluminum hydroxychloride used as a plugging agent.

This invention has now shown that the reaction of the activator is markedly improved by the simultaneous use of sodium cyanate as an activator aid. The two main advantages given by the addition of sodium cycanate are :
1. Better performance of the system at low temperature (< 50.C or < 122. F) and,
2. Greater flexibility in the control of the gelling time.

The specialist will appreciate these two advantages in taking the following two non-limiting examples.

Note: "LOCRON" is an aluminum hydroxychloride corresponding to the above-mentioned formula, which is marketed by the firm of HOECHST AG, Frankfurt, West Germany.

Example A

Different solutions are prepared in a brine containing the "LOCRON"® aluminum hydroxychloride as plugging agent, with the activator being urea in combination with sodium cyanate. the concentration of aluminum hydroxide is 3% by weight.

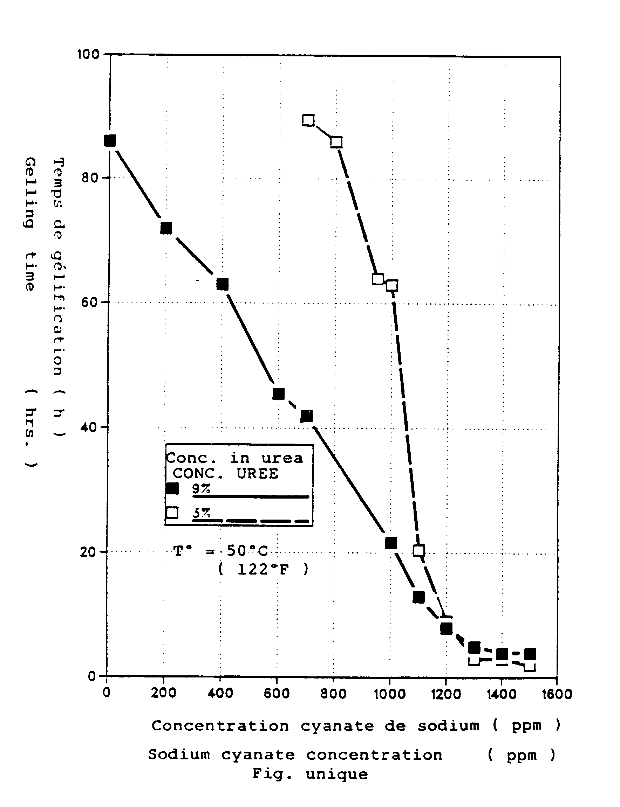

The concentration of urea and sodium cyanate varies in the manner shown on the attached figure, which gived the gelling time variation according to the cyanate concentration for urea concentrations of between 9 and 3% by weight. The brine is typical of those found in the field.

The gelling time is measured at a temperature of 50.C (122.F). Examination of the curved obtained shows that the gelling time can easily be controlled from about 1 to 2 hours to more than 80 hours. The aluminum hydroxychloride content must be at least 2% by weight. The effective concentration of cyanate is about 500 to 1500 ppm.

The fact of having used a brine with 3% NaCl for the tests, confirms the compatibility of the system with saline mediums which is also an important advantage. In fact the system will operate up to at least 10% NaCl. Beyond this the gel is likely to be less strong.

Example B

The operations are the same as for Example A, with the urea being replaced by hexamethylenetetramine. The results are given in the table below and show that hexamethylenetetramine can largely be used in the same way as urea.

Example C

The following formuala is used, prepared according to the invention :

3

approx. 3% by weight of aluminum hydroxychloride
approx. 3 - 9% by weight of urea
approx. 1000 ppm of sodium cyanate.

TABLE

| Test temperature : 50.C (122.F) Brine at 1% NaCl | | |
|---|---|---|
| Sodium Cyanate (ppm) | Hexamethylenetetramine (ppm) | Gel time |
| 1000 | 5000 | 20 H |
| 1000 | 4000 | 40 H |
| 1000 | 3000 | 90 H |
| 1100 | 4000 | 30 H |
| 1100 | 3000 | 60 H |
| 1100 | 2000 | 110 H |
| 1200 | 3500 | 40 H |
| 1200 | 3000 | 60 H |
| 1500 | 2500 | 60 H |

**Claims**

1. Process for delaying and controlling the formation of gels and precipitates derived from aluminum, in which a starting product consisting of a partially neutralized acid salt of aluminum, with the general formula:

$$Al_n(OH)_m.X_p$$

(in which X is a mineral or oragnic anion, or a mixture of mineral or organic anions, with (p x q) + m = 3n, q being the valency of the anion, the ratio (m/3n) x 100 defining the basicity of the said salt and situated between 30 and 80%), is submitted to the reaction of a weak-base activator, and characterized by employment in the activator, of sodium cyanate acting as an activator aid.

2. Process as per Claim 1, characterized by the fact that the said starting product is an aluminum hydroxychloride with the formula 1

$$Al_2(OH)_5 Cl, 2,5 H_2O$$

3. Process as per Claims 1 or 2, characterized by the use of hexamethylenetetramine as activator.

4. Process as per Claims 1 or 2, characterized by the use of urea as activator.

5. Process as per any of Claims 1 to 4, characterized by a cyanate concentration of between 500 and 1500 ppm.

6. Process as per Claims 5, characterized by a urea concentration of 3 to 9%.

7. Process as per Claim 5 or 6, characterized by an aluminum hydroxychloride concentration in the order of 3%.

8. Gelling or precipitation retarding compositions obtained by the process of any of Claims 1 to 7.

9. Applications of the compositions according to claim 8 for the plugging of underground formations, particularly as regards the boring of oil wells or similar.

4

**Revendications**

1. Procédé pour retarder et maîtriser la formation de gels et de précipités dérivant de l'aluminium, selon lequel une matière de départ consistant en un sel acide d'aluminium partiellement neutralisé, de formule générale :

$$Al_n(OH)_m.X_p$$

[dans laquelle X représente un anion minéral ou organique, ou un mélange d'anions minéraux ou organiques, avec $(p \times q) + m = 3n$, q désignant la valence de l'anion, le rapport $(m/3n) \times 100$ définissant la basicité dudit sel et étant compris entre 30 et 80 %], est soumise à l'action d'un activant faiblement basique, procédé caractérisé en ce que qu'on utilise, dans l'activant, du cyanate de sodium, qui agit comme adjuvant pour l'activant.

2. Procédé selon la revendication 1 caractérisé en ce que la matière de départ est un hydroxychlorure d'aluminium de formule :

$$Al_2(OH)_5 Cl.2,5H_2O.$$

3. Procédé selon l'une des revendications 1 et 2, caractérisé en ce qu'on utilise l'hexaméthylène-tétramine comme activant.

4. Procédé selon l'une des revendications 1 et 2, caractérisé en ce qu'on utilise l'urée comme activant.

5. Procédé selon l'une quelconque des revendications 1 à 4, caractérisé en ce que la concentration en cyanate est comprise entre 500 et 1500 ppm.

6. Procédé selon la revendication 5 caractérisé en ce que la concentration en urée est de 3 à 9 %.

7. Procédé selon l'une des revendications 5 et 6, caractérisé en ce que la concentration en hydroxychlorure d'aluminium est de l'ordre de 3 %.

8. Compositions retardant la gélification ou la précipitation qui ont été obtenues par un procédé selon l'une quelconque des revendications 1 à 7.

9. Application de compositions selon la revendication 8 pour le colmatage de formations souterraines, en particulier en ce qui concerne le forage de puits de pétrole ou similaires.

**Patentansprüche**

1. Verfahren zum Verzögern und Steuern der Bildung von Gelen und Präzipitaten, die von Aluminium stammen, worin ein Ausgangsprodukt, das aus einem teilweise neutralisierten sauren Salz von Aluminium besteht, mit der allgemeinen Formel:

$$Al_n(OH)_m \bullet X_p$$

(worin X ein mineralisches oder organisches Anion oder ein Gemisch von mineralischen oder anorgani-schen Anionen und $(p \times q) + m = 3n$ ist, wobei q die Valenz des Anions ist, das Verhältnis $(m/3n) \times 100$ die Basizität des Salzes definiert und zwischen 30 und 80% liegt), der Reaktion eines schwach basischen Aktivators unterzogen wird, und **gekennzeichnet durch** die Verwendung von Natriumcyanat, das als Aktivatorhilfsmittel wirkt, im Aktivator.

2. Verfahren nach Anspruch 1, **gekennzeichnet durch** die Tatsache, daß das Ausgangsprodukt ein Aluminiumhydroxychlorid mit der Formel:

$$Al_2(OH)_5 Cl, 2,5 H_2O$$

ist.

3. Verfahren nach Anspruch 1 oder 2, **gekennzeichnet durch** die Verwendung von Hexamethylentetramin als Aktivator.

4. Verfahren nach Anspruch 1 oder 2, **gekennzeichnet durch** die Verwendung von Harnstoff als Aktivator.

5. Verfahren nach einem der Ansprüche 1 bis 4, **gekennzeichnet durch** eine Cyanat-Konzentration zwischen 500 und 1500 ppm.

6. Verfahren nach Anspruch 5, **gekennzeichnet durch** eine Harnstoff-Konzentration von 3 bis 9%.

7. Verfahren nach Anspruch 5 oder 6, **gekennzeichnet durch** eine Aluminiumhydroxychlorid-Konzentration in der Größenordnung von 3%.

8. Gelbildungs- oder präzipitationshemmende Zusammensetzungen, erhalten durch das Verfahren nach einem der Ansprüche 1 bis 7.

9. Anwendungen der Zusammensetzungen nach Anspruch 8 zum Verstopfen von unterirdischen Formationen, insbesondere im Zusammenhang mit dem Bohren von Ölquellen oder dergleichen.

Fig. unique